# EUROPÄISCHE PATENTANMELDUNG

(11) **EP 4 596 890 A1**
(43) Veröffentlichungstag der Anmeldung: **06.08.2025**
(21) Anmeldenummer: 24223715.4
(22) Anmeldetag: 30.12.2024
(51) Int. Cl.: F04D 29/02, F04D 29/053, F04D 29/26, F01D 5/02, F01D 5/06, F16D 1/06

(54) **VERBINDUNGSADAPTER ZUR LÖSBAREN VERBINDUNG EINES LAUFRADES MIT EINER WELLE, DADURCH GEBILDETE ROTOREINHEIT SOWIE VERFAHREN ZUR HERSTELLUNG EINES TURBOKOMPRESSORS MIT EINER SOLCHEN ROTOREINHEIT**

(30) Priorität: 31.01.2024 DE 102024102697
(71) Anmelder: ebm-papst Mulfingen GmbH & Co. KG, 74673 Mulfingen (DE)
(72) Erfinder: Carle, Christoph, 74670 Forchtenberg (DE); Handschuh, Philipp, 72622 Nürtingen (DE); Dobrica, Mihai B., 69124 Heidelberg (DE); Wilke, Michael, 74575 Schrozberg (DE)
(74) Vertreter: Staeger & Sperling Partnerschaftsgesellschaft mbB

(57) **Zusammenfassung**

Die Erfindung betrifft einen Verbindungsadapter (1) zur lösbaren Verbindung eines Laufrades (2) mit einer insbesondere Keramik oder Wolframkarbid aufweisenden Welle (3) zu einer um eine Rotationsachse (A) rotierbaren Rotoreinheit (4) für einen Turbokompressor, wobei der Verbindungsadapter (1) einen Laufradabschnitt (20) zur Fixierung des Laufrads (2) an dem Verbindungsadapter (1) und einen Wellenabschnitt (30) zur Fixierung des Verbindungsadapters (1) an der Welle (3) aufweist, wobei der Laufradabschnitt (20) ein erstes Axialrichtmittel (21) zur axialen Ausrichtung und ein erstes Radialrichtmittel (22) zur radialen Ausrichtung des Laufrades (2) an dem Verbindungsadapter (1) sowie der Wellenabschnitt (30) ein zweites Axialrichtmittel (31) zur axialen Ausrichtung und ein zweites Radialrichtmittel (32) zur radialen Ausrichtung der Welle (3) an dem Verbindungsadapter (1) aufweisen, durch welche das Laufrad (2) und die Welle (3) in einer vorbestimmten axialen und radialen Ausrichtung zueinander an dem Verbindungsadapter (1) fixierbar sind.

## Beschreibung

Die Erfindung betrifft einen Verbindungsadapter zur lösbaren Verbindung eines Laufrades mit einer insbesondere Keramik oder Wolframkarbid aufweisenden bzw. insbesondere aus Keramik oder Wolframkarbid bestehenden Welle, eine aus der Verbindung des Laufrads mit der Welle durch das Verbindungselement gebildete Rotoreinheit sowie ein Verfahren zur Herstellung eines Turbokompressors mit einer solchen Rotoreinheit.

Aus dem Stand der Technik ist eine Vielzahl von Strömungsmaschinen bzw. Turbokompressoren mit Laufrad und Welle aufweisenden Rotoreinheiten bekannt, wobei Laufrad und Welle oftmals unmittelbar aneinander fixiert sind.

Besteht eine der Komponenten, d.h. das Laufrad oder die Welle, jedoch aus bestimmten Materialien, wie beispielsweise Keramik oder einer Wolframkarbidlegierung, oder enthält diese Materialien in hoher Konzentration, kann es zu Problemen bei der Verbindung von Laufrad und Welle kommen, da die notwendigen Befestigungsmittel beispielsweise nicht mehr ohne Weiteres an der jeweiligen Komponente ausbildbar bzw. vorsehbar sind.

Soll das Laufrad beispielsweise mit einer Schraube an der Welle fixiert werden, kann in einer aus Keramik bestehenden oder einen hohen Keramikanteil aufweisenden Welle kein Loch gebohrt und ein Innengewinde eingeschnitten werden ohne die sehr hohe Wahrscheinlichkeit einer Zerstörung der Welle.

Der Erfindung liegt deshalb die Aufgabe zugrunde, die vorgenannten Nachteile zu überwinden und die Fixierung eines Laufrades an einer insbesondere Keramik oder eine Wolframkarbidlegierung aufweisende Welle zu ermöglichen bzw. zu vereinfachen.

Diese Aufgabe wird durch die Merkmalskombination gemäß Patentanspruch 1 gelöst.

Erfindungsgemäß wird daher ein vorzugsweise einstückiger Verbindungsadapter zur lösbaren Verbindung eines Laufrades mit einer insbesondere Keramik oder Wolframkarbid bzw. eine Wolframkarbidlegierung aufweisenden und insbesondere vollständig aus Keramik oder einer Wolframkarbidlegierung bestehenden Welle zu einer um eine Rotationsachse rotierbaren Rotoreinheit für einen insbesondere ölfreien Turbokompressor vorgeschlagen, bei welchen es sich beispielsweise um einen Hochgeschwindigkeits-Turbokompressor handelt. Unter dem Begriff Turbokompressor werden dabei Radial-, Axial- und Diagonalkompressoren zusammengefasst, sodass es sich auch vorliegend bei dem Turbokompressor um einen Axialkompressor, einen Radialkompressor oder einen Diagonalkompressor handeln kann. Der Verbindungsadapter weist hierbei einen Laufradabschnitt zur insbesondere bestimmungsgemäß lösbaren Fixierung des Laufrads an dem Verbindungsadapter und einen Wellenabschnitt zur insbesondere bestimmungsgemäß dauerhaften Fixierung des Verbindungsadapters an der Welle auf. Als bestimmungsgemäß lösbar wird hierbei verstanden, dass die Verbindung durch entsprechendes Handwerkzeug, wie beispielsweise einen Schraubenschlüssel oder Sechskantschlüssel, in einfacher Weise zerstörungsfrei gelöst und später wiederhergestellt werden kann, wobei als bestimmungsgemäß dauerhaft verstanden wird, dass die Verbindung nur aufwändig aber vorzugsweise zerstörungsfrei lösbar ist. Der Laufradabschnitt weist ein erstes Axialrichtmittel zur axialen Ausrichtung und ein erstes Radialrichtmittel zur radialen Ausrichtung des Laufrades an dem Verbindungsadapter sowie der Wellenabschnitt ein zweites Axialrichtmittel zur axialen Ausrichtung und ein zweites Radialrichtmittel zur radialen Ausrichtung der Welle an dem Verbindungsadapter auf, durch welche das Laufrad und die Welle in einer vorbestimmten axialen und radialen, d.h. insbesondere konzentrischen Ausrichtung zueinander an dem Verbindungsadapter fixierbar sind.

Dadurch, dass Laufrad und Welle in vorbestimmter Ausrichtung aneinander fixierbar sind, bleibt eine vorgenommene Auswuchtung an einer durch das Laufrad, die Welle und den Verbindungsadapter hergestellten Rotoreinheit auch erhalten, wenn die Fixierung bzw. die Verbindung insbesondere des Laufrads bei der Montage der Rotoreinheit oder des Turbokompressors vorübergehend gelöst und später wiederhergestellt wird.

Im Rahmen der vorliegenden Beschreibung beziehen sich Axialrichtung, Radialrichtung und Umfangsrichtung - soweit nicht im konkreten Fall anders angegeben - auf die Rotationsachse.

Eine vorteilhafte Variante des Verbindungsadapters sieht vor, dass der Laufradabschnitt ein Gewinde zur Herstellung einer Schraubverbindung mit dem

Laufrad aufweist. Dabei kann das Gewinde ein sich insbesondere mit seiner Längsachse in Axialrichtung erstreckendes Innengewinde sein, sodass das Laufrad über eine Schraube oder ein von dem Laufrad ausgebildetes Außengewinde mit dem Innengewinde verschraubbar ist. Alternativ kann das Gewinde ein sich insbesondere mit seiner Längsachse in Axialrichtung erstreckendes Außengewinde sein, sodass das Laufrad durch eine Mutter oder ein von dem Laufrad ausgebildetes Innengewinde mit dem Außengewinde verschraubbar ist.

Bei der Verwendung einer Schraube oder einer Mutter ist festzustellen, dass das Laufrad durch diese vorzugsweise jeweils gegen den Verbindungsadapter gepresst, d.h. kraftschlüssig an diesem fixiert werden.

Weiter kann vorgesehen sein, dass der Wellenabschnitt einen als ein Fügepartner einer Passung ausgebildeten Fügeabschnitt bildet oder aufweist. Der Fügeabschnitt kann als ein insbesondere mit seiner Längsachse in Axialrichtung hervorstehender Zapfen zur Fügung mit einer an der Welle vorgesehenen und dazu korrespondierendem Aufnahme ausgebildet sein, sodass der Verbindungsadapter über die durch den Zapfen und die Aufnahme gebildete Passung mit der Welle insbesondere dauerhaft verbindbar ist. Alternativ kann der Fügeabschnitt als eine sich insbesondere mit seiner Längsachse in Axialrichtung erstreckende Hülse bzw. als ein Topf zur Fügung mit einem an der Welle vorgesehenen und dazu korrespondierendem Vorsprung ausgebildet sein, sodass der Verbindungsadapter über die durch die Hülse und den Vorsprung gebildete Passung mit der Welle insbesondere dauerhaft verbindbar ist. Bei der Passung kann es sich insbesondere um eine Übergangspassung oder eine Presspassung handeln.

An dem Laufradabschnitt kann zudem ein erstes Umfangsrichtmittel zur Ausrichtung des Laufrades an dem Verbindungsadapter in einer vorbestimmten Position vorgesehen sein. Zusätzlich oder alternativ kann an dem Wellenabschnitt ein zweites Umfangsrichtmittel zur Ausrichtung des Verbindungsadapters an der Welle in einer vorbestimmten Position vorgesehen sein. Entsprechend kann durch das erste und/oder zweite Umfangsrichtmittel das Laufrad und/oder die Welle in einer vorbestimmten Ausrichtung in Umfangsrichtung zueinander an dem Verbindungsadapter fixierbar sein.

In einem einfachen Fall kann das erste und/oder das zweite Umfangsrichtmittel als Markierung vorgesehen sein, durch welche die jeweilige Komponente mit einer jeweiligen korrespondierenden Markierung in einer vorbestimmten Ausrichtung in Umfangsrichtung bringbar und in dieser dann fixierbar ist.

Alternativ kann es sich bei dem ersten und/oder zweiten Umfangsrichtmittel jedoch auch beispielsweise um einen Kodierstift handeln, zu welchem in der jeweiligen Komponente d.h. in dem Laufrad oder der Welle eine korrespondierende Ausnehmung vorgesehen sein muss. Dabei ist auch die funktionale Umkehr ebenfalls möglich, sodass die jeweilige Ausnehmung an dem Verbindungsadapter und der Kodierstift an der jeweiligen Komponente vorgesehen sein kann.

Eine Weiterbildung des Verbindungsadapters ist zudem ausgebildet, sich zumindest mit seinem Laufradabschnitt in Axialrichtung in das Laufrad zu erstrecken oder das Laufrad radialaußen zu umgreifen, sodass der Verbindungsadapter zumindest in seinem Laufradabschnitt in Axialrichtung mit dem Laufrad überlappt.

Weiter kann der Verbindungsadapter ausgebildet sein, sich zumindest mit seinem Wellenabschnitt in Axialrichtung in die Welle zu erstrecken oder die Welle radialaußen zu umgreifen, sodass der Verbindungsadapter zumindest in seinem Wellenabschnitt in Axialrichtung mit der Welle überlappt.

Vorzugsweise sind der Laufradabschnitt und der Wellenabschnitt derart ausgebildet, dass eine axiale Überlappung des an dem Verbindungsadapter fixierten Laufrades mit der an dem Verbindungsadapter fixierten Welle erzeugt wird, Laufrad und Welle also in Axialrichtung überlappen.

Ferner kann der Verbindungsadapter einen insbesondere zwischen Laufradabschnitt und Wellenabschnitt vorgesehenen bzw. angeordneten Wuchtungsabschnitt zur Auswuchtung des Verbindungsadapters oder einer Einheit aus Verbindungsadapter und Welle oder einer Einheit aus Verbindungsadapter und Laufrad oder der Rotoreinheit aufweisen. Hierfür sind in dem Wuchtungsabschnitt eine zum Materialabtrag ausgebildete Masse also ein zum Materialabtrag ausgebildeter Materialüberschuss und/oder Schnittstellen zur Fixierung von Wuchtgewichten vorgesehen.

Um eine thermische Anbindung des Laufrades an die Welle und umgekehrt zu gewährleisten kann der Laufradabschnitt wärmeleitfähig mit dem Wellenabschnitt verbunden und der Verbindungsadapter dadurch ausgebildet sein, das Laufrad wärmeleitfähig bzw. zur Wärmeabfuhr mit der Welle zu verbinden.

Für den Verbindungsadapter kann als Material beispielsweise Stahl, Titan oder korrosionsbeständige Nickelbasislegierungen verwendet werden, wobei für letztere insbesondere eine zum Anmeldezeitpunkt unter dem Markennamen Inconel verbreitete Legierung in Frage kommt.

Ein Aspekt der Erfindung betrifft ferner eine Rotoreinheit mit einem Laufrad einer Welle und einer das Laufrad mit der Welle verbindenden erfindungsgemäßen Verbindungsadapter. Das Laufrad und die Welle sind dabei axial und radial sowie vorzugsweise in Umfangsrichtung zueinander in einer vorbestimmten Position ausgerichtet und in dieser Position über den Verbindungsadapter aneinander fixiert.

Weiter betrifft ein Aspekt der Erfindung ein Verfahren zur Herstellung eines Turbokompressors bzw. Axial-, Radial- oder Diagonalkompressors mit einer durch einen Elektromotor antreibbaren Rotoreinheit. Gemäß dem Verfahren wird das Laufrad über den Verbindungsadapter in einer vorbestimmten Ausrichtung an der Welle fixiert und die dadurch gebildete Rotoreinheit gewuchtet. Nachfolgend wird das Laufrad der gewuchteten Rotoreinheit von dem Verbindungsadapter demontiert, was bei der initialen Herstellung des Turbokompressors oder beispielsweise im Rahmen einer später erfolgenden Wartung oder Reparatur erfolgen kann. Insbesondere vor dem Hintergrund einer Wartung oder Reparatur bleibt der Verbindungsadapter mit der daran fixierten Welle der gewuchteten Rotoreinheit in einem Gehäuse des Turbokompressors eingesetzt oder wird, beispielsweise bei der initialen Herstellung, in ein solches Gehäuse eingesetzt. Zu einem späteren Zeitpunkt wird das Laufrad dann an dem mit der Rotoreinheit in dem Gehäuse des Turbokompressors eingesetzten Verbindungsadapter in der vorbestimmten axialen und/oder radialen Ausrichtung und/oder Ausrichtung in Umfangsrichtung fixiert, sodass also die zuvor vorgenommene Auswuchtung trotz vorübergehender Demontage der Rotoreinheit erhalten bleibt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Rotoreinheit umfassend eine erste Variante eines Verbindungsadapters;
- Fig. 2: eine Rotoreinheit umfassend eine zweite Variante eines Verbindungsadapters.

Die Figuren sind beispielhaft schematisch. Gleiche Bezugszeichen in den Figuren weisen auf gleiche funktionale und/oder strukturelle Merkmale hin.

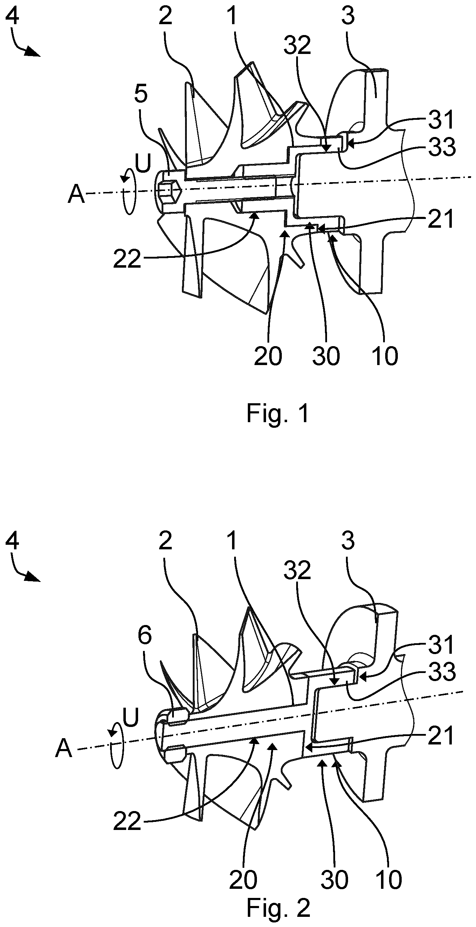

Die Figuren 1 und 2 zeigen jeweils eine um eine Rotationsachse A rotierbare Rotoreinheit 4, welche jedoch unterschiedlich ausgebildete Verbindungselemente 1 mit einem jeweils entsprechenden Laufrad 2 und einer Welle 3 vorsehen.

Unabhängig von der konkreten Ausbildung weisen die Verbindungselemente 1 jeweils einen Laufradabschnitt 20 und einen Wellenabschnitt 30 auf.

Das Laufrad 2 kann an dem Laufradabschnitt 20 über ein erstes als Axialanschlag ausgebildetes Axialrichtmittel 21 und ein erstes als sich in Umfangsrichtung U erstreckende (Außen-) Passfläche ausgebildetes Radialrichtmittel 22 axial und radial ausgerichtet werden.

Analog kann die Welle 3 an dem Wellenabschnitt 30 über ein zweites als Axialanschlag ausgebildetes Axialrichtmittel 31 und ein zweites als sich in Umfangsrichtung U erstreckende (Innen-) Passfläche einer Hülse 33 ausgebildetes Radialrichtmittel 32 axial und radial ausgerichtet werden.

Die Welle 3, welche vorzugsweise vollständig oder zumindest im Wesentlichen aus Keramik oder Wolframkarbid gebildet ist, wird dabei über eine Press- oder Übergangspassung in die Hülse 33 eingepresst und dadurch mit dem Verbindungsadapter 1 fixiert.

Gemäß der in Figur 1 dargestellten Variante ist in dem Laufradabschnitt 20 ein Innengewinde vorgesehen, in welches eine Schraube 5 zur Fixierung des Laufrades 2 einschraubbar ist.

Davon abweichend wird in Figur 2 angrenzend an die als (Außen-) Passfläche ausgebildeten ersten Radialrichtmittel 22 ein Außengewinde von dem Verbindungsadapter 1 ausgebildet, an welchem eine Mutter 6 zur Fixierung des Laufrades 2 verschraubbar ist.

Um ein Wuchten der Rotoreinheit 4 bzw. ein Vorwuchten der Rotoreinheit 4 vor einem nachfolgenden endgültigen Wuchten durchführen zu können, ist jeweils ein Wuchtungsabschnitt 10 vorgesehen, an welchem ein Materialabtrag zur Auswuchtung erfolgen kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verbindungsadapter (1) zur lösbaren Verbindung eines Laufrades (2) mit einer insbesondere Keramik oder Wolframkarbid aufweisenden Welle (3) zu einer um eine Rotationsachse (A) rotierbaren Rotoreinheit (4) für einen Turbokompressor,
wobei der Verbindungsadapter (1) einen Laufradabschnitt (20) zur Fixierung des Laufrads (2) an dem Verbindungsadapter (1) und einen Wellenabschnitt (30) zur Fixierung des Verbindungsadapters (1) an der Welle (3) aufweist,
wobei der Laufradabschnitt (20) ein erstes Axialrichtmittel (21) zur axialen Ausrichtung und ein erstes Radialrichtmittel (22) zur radialen Ausrichtung des Laufrades (2) an dem Verbindungsadapter (1) sowie der Wellenabschnitt (30) ein zweites Axialrichtmittel (31) zur axialen Ausrichtung und ein zweites Radialrichtmittel (32) zur radialen Ausrichtung der Welle (3) an dem Verbindungsadapter (1) aufweisen, durch welche das Laufrad (2) und die Welle (3) in einer vorbestimmten axialen und radialen Ausrichtung zueinander an dem Verbindungsadapter (1) fixierbar sind.

2. Verbindungsadapter nach Anspruch 1,
wobei der Laufradabschnitt (20) ein Gewinde zur Herstellung einer Schraubverbindung mit dem Laufrad aufweist,
wobei das Gewinde ein sich insbesondere mit seiner Längsachse in Axialrichtung erstreckendes Innengewinde ist, sodass das Laufrad (2) über eine Schraube (5) oder ein von dem Laufrad (2) ausgebildetes Außengewinde mit dem Innengewinde verschraubbar ist, oder
wobei das Gewinde ein sich insbesondere mit seiner Längsachse in Axialrichtung erstreckendes Außengewinde ist, sodass das Laufrad (2) durch eine Mutter (6) oder ein von dem Laufrad (2) ausgebildetes Innengewinde mit dem Außengewinde verschraubbar ist.

3. Verbindungsadapter nach Anspruch 1 oder 2,
wobei der Wellenabschnitt (30) einen als ein Fügepartner einer Passung ausgebildeten Fügeabschnitt bildet oder aufweist,
wobei der Fügeabschnitt als ein insbesondere mit seiner Längsachse in Axialrichtung hervorstehender Zapfen zur Fügung mit einer an der Welle (3) vorgesehenen und dazu korrespondierendem Aufnahme ausgebildet ist, sodass der Verbindungsadapter (1) über die durch den Zapfen und die Aufnahme gebildete Passung mit der Welle (3) verbindbar ist, oder
wobei der Fügeabschnitt als eine sich insbesondere mit seiner Längsachse in Axialrichtung erstreckende Hülse (33) zur Fügung mit einem an der Welle (3) vorgesehenen und dazu korrespondierendem Vorsprung ausgebildet ist, sodass der Verbindungsadapter (1) über die durch die Hülse (33) und den Vorsprung gebildete Passung mit der Welle (3) verbindbar ist,
und wobei es sich bei der Passung insbesondere um eine Übergangspassung oder eine Presspassung handelt.

4. Verbindungsadapter nach einem der vorhergehenden Ansprüche,
wobei an dem Laufradabschnitt (20) ein erstes Umfangsrichtmittel zur Ausrichtung des Laufrades (2) an dem Verbindungsadapter (1) in einer vorbestimmten Position vorgesehen ist und/oder
wobei an dem Wellenabschnitt (30) ein zweites Umfangsrichtmittel zur Ausrichtung des Verbindungsadapters (1) an der Welle (3) in einer vorbestimmten Position vorgesehen ist,
durch welche das Laufrad (2) und die Welle (3) in einer vorbestimmten Ausrichtung in Umfangsrichtung (U) zueinander an dem Verbindungsadapter (1) fixierbar sind.

5. Verbindungsadapter nach einem der vorhergehenden Ansprüche,
welcher ausgebildet ist, sich zumindest mit seinem Laufradabschnitt (20) in Axialrichtung in das Laufrad (2) zu erstrecken oder das Laufrad (2) radialaußen zu umgreifen, sodass der Verbindungsadapter (1) zumindest in seinem Laufradabschnitt (20) in Axialrichtung mit dem Laufrad (2) überlappt.

6. Verbindungsadapter nach einem der vorhergehenden Ansprüche,
welcher ausgebildet ist, sich zumindest mit seinem Wellenabschnitt (30) in Axialrichtung in die Welle (3) zu erstrecken oder die Welle (3) radialaußen zu umgreifen, sodass der Verbindungsadapter (1) zumindest in seinem Wellenabschnitt (30) in Axialrichtung mit der Welle (3) überlappt.

7. Verbindungsadapter nach einem der vorhergehenden Ansprüche,
wobei der Laufradabschnitt (20) und der Wellenabschnitt (30) ausgebildet sind, eine axiale Überlappung des an dem Verbindungsadapter (1) fixierbaren Laufrades (2) mit der an dem Verbindungsadapter (1) fixierbaren Welle (3) zu erzeugen.

8. Verbindungsadapter nach einem der vorhergehenden Ansprüche,
ferner aufweisend einen insbesondere zwischen Laufradabschnitt (20) und Wellenabschnitt (30) vorgesehenen Wuchtungsabschnitt (10) zur Auswuchtung des Verbindungsadapters (1) oder einer Einheit aus Verbindungsadapter (1) und Welle (3) oder einer Einheit aus Verbindungsadapter (1) und Laufrad (2) oder der Rotoreinheit (4),
wobei in dem Wuchtungsabschnitt (10) eine zum Materialabtrag ausgebildete Masse und/oder Schnittstellen zur Fixierung von Wuchtgewichten vorgesehen ist.

9. Verbindungsadapter nach einem der vorhergehenden Ansprüche,
wobei der Laufradabschnitt (20) wärmeleitfähig mit dem Wellenabschnitt (30) verbunden und der Verbindungsadapter (1) dadurch ausgebildet ist, das Laufrad (2) wärmeleitfähig mit der Welle (3) zu verbinden.

10. Rotoreinheit (4) mit einem Laufrad (2) einer Welle (3) und einer das Laufrad (2) mit der Welle (3) verbindenden Verbindungsadapter (1) gemäß einem der vorhergehenden Ansprüche,
wobei das Laufrad (2) und die Welle (3) axial und radial zueinander ausgerichtet über den Verbindungsadapter (1) aneinander fixiert sind.

11. Verfahren zur Herstellung eines Turbokompressors mit einer durch einen Elektromotor antreibbaren Rotoreinheit (4) nach dem vorhergehenden Anspruch,
wobei das Laufrad (2) über den Verbindungsadapter (1) in einer vorbestimmten Ausrichtung an der Welle (3) fixiert und die dadurch gebildete Rotoreinheit (4) gewuchtet wird,
wobei das Laufrad (2) der gewuchteten Rotoreinheit (4) von dem Verbindungsadapter (1) demontiert wird,
wobei der Verbindungsadapter (1) mit der daran fixierten Welle (3) der gewuchteten Rotoreinheit (4) in einem Gehäuse des Turbokompressors eingesetzt bleibt oder eingesetzt wird,
und wobei das Laufrad (2) an dem mit der Rotoreinheit (4) in dem Gehäuse des Turbokompressors eingesetzten Verbindungsadapter (1) in der vorbestimmten Ausrichtung fixiert wird.
